# EUROPEAN PATENT SPECIFICATION

(11) **EP 3 160 076 B1**
(45) Date of publication and mention of the grant of the patent: **16.10.2019**
(21) Application number: 14896875.3
(22) Date of filing: 03.11.2014
(51) Int. Cl.: H04J 3/06, H04L 25/14

(54) **SEQUENCE DETECTION METHOD AND DEVICE, AND COMPUTER STORAGE MEDIUM**
SEQUENZDETEKTIONSVERFAHREN UND -VORRICHTUNG SOWIE COMPUTERSPEICHERMEDIUM
PROCÉDÉ ET DISPOSITIF DE DÉTECTION DE SÉQUENCE, ET SUPPORT DE STOCKAGE INFORMATIQUE

(30) Priority: 30.06.2014 CN 201410309610
(43) Date of publication of application: 26.04.2017
(73) Proprietor: Sanechips Technology Co., Ltd., Shenzhen, Guangdong 518055 (CN)
(72) Inventor: HE, Kaijiang, Shenzhen, Guangdong 518055 (CN); PENG, Junfeng, Shenzhen, Guangdong 518055 (CN)
(74) Representative: Arnold + Siedsma
(86) International application number: PCT/CN2014/090183
(87) International publication number: WO 2016/000372

(56) References cited:
- CN-A- 101 499 845
- CN-A- 102 752 257
- CN-A- 102 832 981
- CN-U- 201 860 341
- JP-A- S62 173 833

## Description

### TECHNICAL FIELD

The disclosure relates to a sequence detection technology in the field of communications, and in particular to a sequence detection method and apparatus, and a computer storage medium.

### BACKGROUND

During data transmission, in order to achieve frame synchronization or system synchronization, frame header sequences or system synchronization sequences will be usually inserted into a sending end, these sequences will be detected at a receiving end, and frame synchronization or system synchronization is performed according to these sequences. However, during detection of frame synchronization or system synchronization in the conventional art, data is usually input into a detection circuit bit by bit, the detection circuit extracts a data segment with a length of a frame header sequence or a system synchronization sequence, and then it is determined whether the data segment is a synchronization sequence. The detection method is low in detection efficiency.

JP-A-62-173833 discloses that serial data input is converted to parallel data by a serial-parallel converting circuit and is latched in n-number of latch circuit whose timings are shifted from one another; the frame pattern of data from each latch circuit is detected by a frame pattern detecting circuit; a control circuit integrates detection results and controls a selecting circuit to select required n-bit parallel data; thus the bit rate is reduced to 1/n to perform the processing.

CN-U-201860341 discloses a frame synchronizer, which comprises a bit slider, and a parallel detector connected with the bit slider, wherein the bit slider receives data flow, slides steps for data flow received, outputs n strands of data flow which is underwent sliding steps and in a unit of word length n, and then transmits the data flow to the parallel detector, the sliding value of each strand of data flow underwent sliding step being a nature number between 0 to n-1, wherein n is a natural number and sliding values corresponding to each strand are different. The parallel detector separately locks and detects n strands of the data flow through a synchronous word of the data flow received by the bit slider and outputs locked data flow. The frame synchronizer can synchronize data rapidly and reduce data bulk wasted during the synchronization process due to lock and search.

### SUMMARY

In view of this, the embodiments of the disclosure are intended to provide a novel sequence detection method and apparatus, and a computer storage medium.

The technical solutions of the embodiments of the disclosure are implemented as follows.

According to the first aspect of the embodiments of the disclosure, a sequence detection method is provided, including:
acquiring i-path data with the degree of parallelism i;
forming an x-th detection data set by joining x-th i-path data and (x+1)-th i-path data;
extracting s paths of data contiguously distributed in the detection data set within each of n detection windows to form n data segments;
performing a correlation operation between each data segment and a local sequence; and
determining, according to a result of the correlation operation, whether a data segment is a target sequence,
wherein x is an integer not less than 1, x is represented as an x-th input moment, x+1 is represented as an (x+1)-th input moment, and the (x+1)-th input moment is later than the x-th input moment, and i is an integer not less than 2,
n is less than or equal to i, and
s is an integer not less than 1 and equal to a bit number of the target sequence.
In the foregoing solution, n may be equal to i, and
the number of different bits between two data segments extracted from two adjacent detection windows may be 1.

In the foregoing solutions, when n is less than i, extracting the s paths of data contiguously distributed in the detection data set within each of n detection windows to form n data segments may further include:
dividing the x-th detection data set into n data detection sub-sets, each of the n data detection sub-sets including contiguously-distributed i+(i/n)-1-path data, wherein two adjacent data detection sub-sets include the same i/n-path data;
extracting, by means of each detection window, a (y-1)-th data segment in a data detection sub-set corresponding to the each detection window within a y-th detection period; and
extracting, by means of each detection window, a y-th data segment in a data detection sub-set corresponding to the each detection window within a (y+1)-th detection period,
y being an integer not less than 1.

In the foregoing solutions, the target sequence may be a frame header sequence or a system synchronization sequence.

In the foregoing solutions, frame header sequences of N data frames received from M lanes may be the same; and
correspondingly, performing the correlation operation between each data segment and the local sequence may be:
performing the correlation operation between each data segment and the same local frame header sequence,
wherein N is greater than or equal to 1 and less than or equal to the number of lanes M which is an integer not less than 2.
In the foregoing solutions, system synchronization sequences received from different lanes may be different; and
correspondingly, performing the correlation operation between each data segment and the local sequence may be:
   performing the correlation operation between each data segment and each local system synchronization sequence.

According to the second aspect of the embodiment of the disclosure, a sequence detection apparatus is provided, including:
an acquiring unit, configured to acquire i-path data with the degree of parallelism i;
a forming unit, configured to form an x-th detection data set by joining x-th i-path data and (x+1)-th i-path data;
an extracting unit, configured to extract s paths of data contiguously distributed in the detection data set within each of n detection windows to form n data segments;
an operating unit, configured to perform a correlation operation between each data segment and a local sequence; and
a determining unit, configured to determine, according to a result of the correlation operation, whether a data segment is a target sequence,
wherein x is an integer not less than 1, , x is represented as an x-th input moment, x+1 is represented as an (x+1)-th input moment, and the (x+1)-th input moment is later than the x-th input moment, and i is an integer not less than 2,
n is less than or equal to i, and
s is an integer not less than 1 and equal to a bit number of the target sequence.
In the foregoing solution, n may be equal to i, and
the number of different bits between two data segments extracted from two adjacent detection windows may be 1.

In the foregoing solutions, when n is less than i, the extraction unit may further include:
a dividing module, configured to divide the x-th detection data set into n data detection sub-sets, each of the n data detection sub-sets including contiguously-distributed i+(i/n)-1-path data, wherein two adjacent data detection sub-sets include the same i/n-path data; and
an extracting module, configured to extract, by means of each detection window, a (y-1)-th data segment in a data detection sub-set corresponding to the each detection window within a y-th detection period, and extract, by means of each detection window, a y-th data segment in a data detection sub-set corresponding to the each detection window within a (y+1)-th detection period,
y being an integer not less than 1.

In the foregoing solutions, the target sequence may be a frame header sequence or a system synchronization sequence.

In the foregoing solutions, frame header sequences of N data frames received from M lanes may be the same; and
correspondingly, the operating unit may be configured to perform the correlation operation between each data segment and the same local frame header sequence,
wherein N is greater than or equal to 1 and less than or equal to the number of lanes M which is an integer not less than 2.

In the foregoing solution, system synchronization sequences received from different lanes may be different; and
correspondingly, the operating unit may be configured to perform the correlation operation between each data segment and each local system synchronization sequence.

According to the third aspect of the embodiment of the disclosure, a computer storage medium is provided. The computer storage medium may include a set of instructions. When the instructions are executed, at least one processor may be triggered to execute the foregoing sequence detection method.

According to the sequence detection method and apparatus and the computer storage medium provided by the embodiment of the disclosure, a data frame is converted into i-path data to be input into a detection circuit, the detection circuit can receive the i-path data immediately, a data segment is then extracted by means of a detection window, and a correlation operation is performed on the data segment to determine whether the data segment is a target sequence. Firstly, a sequence detection method for parallel transmission data is provided. Then, the sequence detection method for parallel transmission data has the advantages of low time delay, high efficiency and the like.

### BRIEF DESCRIPTION OF THE DRAWINGS

In accompanying drawings (not necessarily drawn in proportion), like reference numerals denote like parts in different views. The like reference numerals having different letter suffixes may represent different examples of the like parts. The accompanying drawings substantially show each embodiment discussed herein in an example giving way instead of a limitation way.
Fig. 1 is a flowchart of a sequence detection method according to a method embodiment of the disclosure;
Fig. 2 is a first schematic diagram of a target sequence detection effect according to a method embodiment of the disclosure;
Fig. 3 is a second schematic diagram of a target sequence detection effect according to a method embodiment of the disclosure;
Fig. 4 is a structural diagram of a detection apparatus according to a device embodiment of the disclosure; and
Fig. 5 is a structural diagram of an extraction unit according to a device embodiment of the disclosure.

### DETAILED DESCRIPTION

The implementation of the technical solution will be further elaborated below in conjunction with the accompanying drawings.

### Method embodiment:

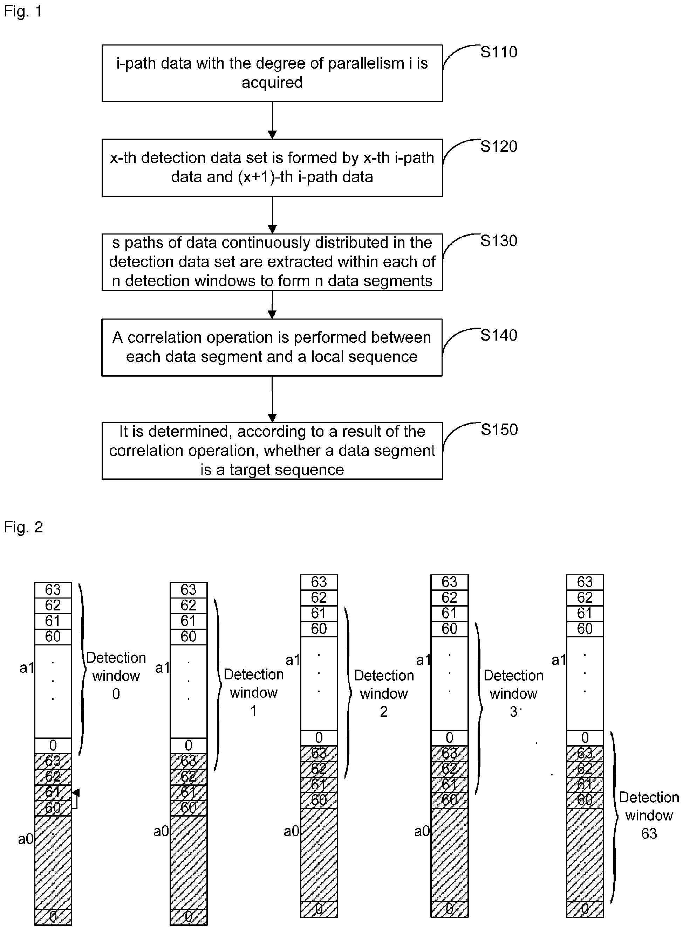

As shown in Fig. 1, this embodiment provides a sequence detection method, which includes the steps as follows.
Step S110: i-path data with the degree of parallelism i is acquired.
Step S120: x-th detection data set is formed by x-th i-path data and (x+1)-th i-path data.
Step S130: s paths of data continuously distributed in the detection data set are extracted in each of n detection windows to form n data segments.
Step S140: A correlation operation is performed between each data segment and a local sequence.
Step S150: It is determined, according to a result of the correlation operation, whether a data segment is a target sequence.

Wherein x is an integer not less than 1, i is an integer not less than 2,
n is less than or equal to i, and
s is an integer not less than 1 and equal to a bit number of the target sequence.

Step S110 may specifically refer to: serially receiving a data frame from a peripheral device, forming i-path data with the degree of parallelism i in a sequence of serial receiving after series-to-parallel conversion, and inputting the i-path data corresponding to the data frame into a detection circuit of a detection apparatus beat by beat. A path of data corresponds to a data input beat to input a bit of data. Specifically, for example, i=64, then the detection circuit will receive a beat of data, that is, 64 bits of data are received.

In Step S110, i-path data transmitted in parallel may also be directly received from the peripheral device.

x may be represented as an x-th input moment, and x+1 is represented as an (x+1)-th input moment, the (x+1)-th input moment being later than the x-th input moment.

In Step S120 of this embodiment, data input at two adjacent input moments constitutes a data detection set. As for each data set, a data segment with the length of s bits may be extracted by means of n detection windows, the bit number of the data segment being equal to the length of a target sequence.

In Step S130, a correlation operation is performed between each detection sequence and a local sequence so as to form a result of the correlation operation. In Step S140, it may be determined, according to the result, whether the data segment is the target sequence.

The correlation operation may be a comparison operation, capable of obtaining a differential bit number between the extracted data segment and the local sequence by means of a comparison result, or may be an exclusive-OR logic operation, capable of obtaining the differential bit number between the extracted data segment and the local sequence by means of an exclusive-OR logic operation result; wherein the local sequence is pre-stored at the receiving end, and is the same as the target sequence inserted into a data frame at the sending end.

How to determine whether a data segment correlated to a local sequence is a target sequence may be specifically performed by means of the following methods:
an exclusive-OR operation is performed on a data segment and a local sequence, a formed operation result is the number of "1";
when the number of "1" is less than a lower threshold value, determining forward transmission of the data, the data segment is the target sequence;
when the number of "1" is greater than an upper threshold value, determining reverse transmission of the data, the data segment is the target sequence; and
when the number of "1" is not greater than the upper threshold value and not less than the lower threshold value, determining abnormal transmission of the data and failed detection of the target sequence.

In a specific implementation process, a method for setting only one threshold value is further adopted except the above mentioned method for determining the upper threshold value or lower threshold value, and there are many specific implementation modes, not limited to the foregoing modes.

Besides, there may be one or more local sequences. When there are more local sequences, a correlation operation is usually needed between each data segment and each local sequence.

In conclusion, the sequence detection method includes: firstly, forming i paths of data, and extracting a data segment from a data set formed by the i paths of data to perform a correlation operation. Compared with the conventional method in which one data segment is extracted only when s beats of data are received, the sequence detection method is higher in efficiency obviously. Firstly, the embodiment provides a method for detecting a target sequence for data input to a detection circuit in parallel. Secondly, a target sequence is detected for serial transmission data by means of series-to-parallel conversion and other processing after i paths of data are formed, such that the detection efficiency can be improved.

Two specific implementation modes are provided as follows.

### Implementation mode 1:

n is equal to i, and
the number of different bits between two data segments extracted from two adjacent detection windows is 1.

As shown in Fig. 2, after series-to-parallel conversion of data, 64 paths of data, namely a 0-th path of data to a 63-rd path of data, are formed, and a bit of data is transmitted by a beat in a path of data, wherein a1 represents 64 bits of data received at a previous receiving moment, and a0 represents 64 bits of data received and stored at a current receiving moment.

If n=i=64, 64 data segments with the length of 64 bits are extracted by using 64 detection windows, wherein different bit number contained by two adjacent data segments is 1.

For example, a data segment extracted by using a detection window 1 contains a 0-th path of data to a 63-rd path of data in a1; the data segment extracted by using the detection window 1 contains a 62-nd path of data to a 0-th path of data in a1 and a 63-rd path of data in a1; a data segment extracted by using a detection window 2 contains a 61-st path of data to a 0-th path of data in a1 and a 63-rd path of data to a 62-nd path of data in a0; a data segment extracted by using a detection window 3 contains a 60-th path of data to a 0-th path of data in a1 and a 63-rd path of data to a 61-st path of data in a0; a detection window 4 to a detection window 62 use such analogy; and a data segment extracted by using a detection window 63 contains a 0-th path of data in a1 and a 63-rd path of data to a 1-st path of data in a1. Parts covered by shadows in the figure are data in a0.

Thus, every 64 paths of data continuously distributed in a lane is operated by using 64 detection windows, wherein the difference between different data bit numbers within adjacent detection windows is 1.

When n=i, it can be detected, within a detection period, whether the target sequence is within the i paths of data.

### Implementation mode 2:

When n is less than i, extracting the s paths of data continuously distributed in the detection data set within each of n detection windows to form n data segments further includes:
dividing the x-th detection data set into n data detection sub-sets, each of the data detection sub-sets including continuously-distributed i+(i/n)-1-path data, wherein two adjacent data detection sub-sets include the same i/n-path data;
extracting, by means of each detection window, a (y-1)-th data segment in a data detection sub-set corresponding to the each detection window within a y-th detection period; and
extracting, by means of each detection window, a y-th data segment in ta data detection sub-set corresponding to the each detection window within a (y+1)-th detection period,
y being an integer not less than 1.

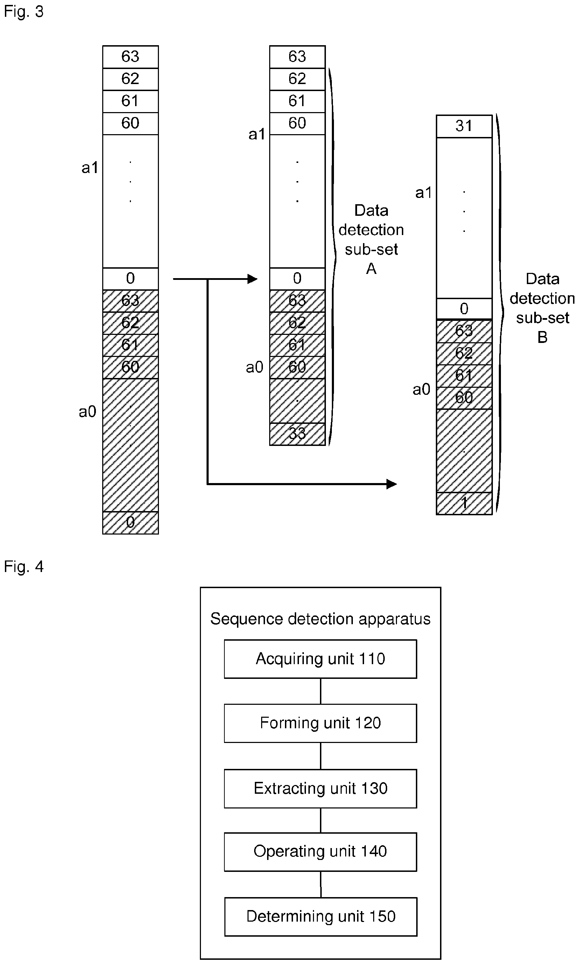

As shown in Fig. 3, there are two detection windows, namely a detection window A and a detection window B, the detection window A and the detection window B being extracted data segments with the length of 64 bits, wherein a data detection sub-set detected by the detection window A is a data detection sub-set A, the data detection sub-set A includes a 63-rd path of data to a 0-th path of data in a1 and a 63-th path of data to a 33-rd path of data in a0. A data detection sub-set detected by the detection window B is a data detection sub-set B, the data detection sub-set B includes a 31-st path of data to a 0-th path of data in a1 and a 63-rd path of data to a 1-st path of data in a0.

Within the first detection period, the 63-rd path of data to the 0-th path of data in a1 will be extracted by means of the detection window A to form the data segment; and within the second detection period, the 62-nd path of data to the 0-th path of data in a1 and the 63-rd path of data in a0 will be extracted by means of the detection window A to form the data segment, and so on.

Within the first detection period, the 31-st path of data to the 0-th path of data in a1 and the 63-rd path of data to the 32-nd path of data in a0 will be extracted by means of the detection window B to form the data segment; and within the second detection period, the 30-th path of data to the 0-th path of data in a1 and the 63-rd path of data to the 31-st path of data in a0 will be extracted by means of the detection window B to form the data segment, and so on.

By means of the implementation mode 2, application of detection windows can be reduced, and a detection circuit is usually applicable to detection of continuous sending, via a sending end, of a plurality of data frames provided with target sequences at the same position, or may be applied to a scenario where the same data frame is repeatedly input to the detection circuit. In one embodiment, a data frame is detected within a detection period.

In one embodiment, the target sequence is a frame header sequence or a system synchronization sequence. The frame header sequence is configured for frame synchronization between the sending end and the receiving end, and the system synchronization sequence is configured for system synchronization between the receiving end and the sending end. The frame header sequence and the system synchronization sequence are both located in a frame header of a data frame usually. During detection of the target sequence, it is only necessary to detect the frame header of the data frame.

In a specific implementation process, if a transmission lane of the detected data frame corresponds to a plurality of lanes, the system synchronization sequence and lane identification information of the lanes have a mapping relationship in one embodiment, such that during parsing of the system synchronization sequence, a certain lane over which the sending end sends the data frame may be known.

In one embodiment, frame header sequences of N data frames received from M lanes are the same; and
Step S140 may be:
performing the correlation operation between each data segment and the same local frame header sequence,
wherein N is greater than or equal to 1 and less than or equal to the number of lanes M which is an integer not less than 2.

In this embodiment, the frame header sequences of N data frames received from M lanes are the same, such that only one local sequence is needed to detect the frame header sequence, and the burden of a correlation operation in a detection process and the complexity of a circuit can be further reduced.

Specifically, for example, at present, N=M=4, and frame header sequences contained in each data frame are different, so a corresponding receiving end needs a corresponding local sequence to successfully detect frame header sequences in each data frame in each lane. If so, after the receiving end receives four data frames, four local sequences are needed to detect each data frame, and accordingly, detection needs to be performed for 16 times. However, by means of the method of this embodiment, since the frame header sequences borne by N data frames are the same, it is only necessary to utilize one local sequence to detect for four times.

Compared with the conventional method, the method of this embodiment is easy to operate, low in system overhead, and low in overhead of hardware for implementing the method of this embodiment.

In one embodiment, system synchronization sequences received from different lanes are different; and
Step S140 may be:
performing the correlation operation between each data segment and each local system synchronization sequence.

The receiving end usually negotiates with the receiving end in advance over system synchronization sequences to be sent, or the receiving end knows system synchronization sequences, to be sent, in advance by means of relevant provisions such as a communication protocol, and these sequences are called as local sequences at the receiving end. When receiving a data frame, the receiving end does not know which system synchronization sequence is specifically borne by this data frame, so it is necessary to perform a correlation operation with each local sequence.

In a specific implementation process, the target sequence may be simultaneously constituted by two sequences needing to be detected respectively. For example, the target sequence simultaneously includes a frame header sequence and a system synchronization sequence. In this case, the bit number of the system synchronization sequence is usually selected to be less than the length of the frame header sequence.

In a specific implementation process, when the target sequence is the system synchronization sequence, after the target sequence is detected, the method of this embodiment further includes:
determining, according to the system synchronization sequence and a predetermined policy, whether system synchronization is abnormal.

The predetermined policy is a policy implemented, determined and stored at the receiving end. There are many specific implementation modes. In one embodiment, the following modes may be adopted.

Determining, according to the system synchronization sequence and the predetermined policy, whether synchronization between communication systems of the receiving end and the sending end is abnormal includes:
when any two system synchronization sequences in the N data frames are the same, determining that system synchronization between the receiving end and the sending end is abnormal.

Under normal conditions, a time sequence in which the receiving end receives data frames shall be consistent with a sequence in which the sending end sends data frames. System synchronization sequences of any two data frames sent by the sending end at t2 are different. If system synchronization sequences of two data frames received by the receiving end at t3 are the same, system transmission and processing abnormality and system non-synchronization are determined, wherein t3 is later than t2.

Besides, vector data is divided into I-path data and Q-path data, the I-path data being borne by a first data frame, the Q-path data being borne by a second data frame.

N lanes are divided into J lane sets, a lane in one of the lane sets is configured to receive the first data frame, and the other lane is configured to receive the second data frame, J being an integer not less than 1.

Determining, according to the system synchronization sequence and the predetermined policy, whether synchronization between the communication systems of the receiving end and the sending end is abnormal further includes:
when the first data frame and the second data frame are received from different lane sets, determining that system synchronization between the receiving end and the sending end is abnormal.

Two data frames corresponding to the same data vector will be sent in the same lane set usually. If the first data frame and the second data frame appear in two different lane sets, it is determined that system synchronization is abnormal in this case.

In a specific implementation process, two adjacent lanes are regarded as a lane set usually. For example, as for a transmission lane having four lanes, a 0-th lane and a 1-st lane are regarded as a lane set usually, and a 2-nd lane and a 3-rd lane are regarded as a lane set. In this case, if a first data frame corresponding to a data vector appears in the 1-th lane, a second data frame appears in the 3-rd lane, and it is determined that system synchronization is abnormal in this case.

In one embodiment, in order to simplify representation of a system synchronization sequence, the system synchronization sequence and lane identification information of the lanes have a mapping relationship. The specific lane identification information may be identification information such as lane serial numbers or lane names.

In one embodiment, a serial number 1 of a 1-st lane is inserted into a frame header of a data frame sent on the 1-st lane, and a serial number a of an a-th lane is inserted into a frame header of a data frame sent on the a-th lane, such that system synchronization sequences in data frames sent by different lanes are different, and it is impossible to send two data frames with the same system synchronization sequences at the same time.

Besides, two data frames corresponding to the same data vector are sent by means of the same lane set. If in this case, an a-th lane and an (a+1)-th lane belong to the same lane set, then a data frame sent by the a-th lane bears lane identification information of the a-th lane, and a data frame sent by the (a+1)-th lane bears lane identification information of the (a+1)-th lane. If the lane identification information of the data frame received from the (a+1)-th lane is a+1 and lane identification information of the data frame received from an (a+2)-th lane is a, then it is determined that system synchronization is abnormal.

In one embodiment, when one of two data frames received at the same receiving time bears a first system synchronization sequence, the other data frame bears a second system synchronization sequence, and the first system synchronization sequence and the second system synchronization sequence correspond to the same lane, then it may be determined that system synchronization is abnormal.

In conclusion, this embodiment provides a sequence detection method, capable of quickly detecting a target sequence.

### Device embodiment:

As shown in Fig. 4, this embodiment provides a sequence detection apparatus, which includes:
an acquiring unit 110, configured to acquire i-path data with the degree of parallelism i;
a forming unit 120, configured to form an x-th detection data set by x-th i-path data and (x+1)-th i-path data;
an extracting unit 130, configured to extract s paths of data continuously distributed in the detection data set within each of n detection windows to form n data segments;
an operating unit 140, configured to perform a correlation operation between each data segment and a local sequence; and
a determining unit 150, configured to determine, according to a result of the correlation operation, whether a data segment is a target sequence,
wherein x is an integer not less than 1, i is an integer not less than 2,
n is less than or equal to i, and
s is an integer not less than 1 and equal to a bit number of the target sequence.

In this embodiment, the acquiring unit 110 may be of different specific structures according to different modes of acquiring the i-path data. Specifically, if serial transmission data is converted into parallel transmission i-path data, the acquiring unit 110 is a series-to-parallel converter; and if the i-path data is directly received from a peripheral device, the specific structure of the acquiring unit 110 may be a receiving interface. The receiving interface may be a wired interface or a wireless interface. The wired interface may be an optical fiber interface or the like. The wireless interface may be a receiving antenna or the like.

A specific structure of the forming unit 120 may include a storage medium, a processor and the like. The storage medium specifically refers, for example, to a register, which may be configured to store the x-th i-path data, and the processor forms the x-th detection data set by the x-th i-path data and the (x+1)-th i-path data.

Specific structures of the forming unit 120, the extracting unit 130, the operating unit 140 and the determining unit 150 may include processors and storage media. The processors and the storage media are connected by means of communication interfaces inside a synchronization apparatus and communicate with each other. Executable instructions are stored on the storage media, the processors read and execute the executable instructions, and the position of a target sequence may be detected. The processors may be electronic components having a processing function such as Central Processing Units (CPU), Micro Control Units (MCU), Digital Signal Processors (DSP) or Field-Programmable Gate Arrays (FPGA).

The specific structure of the operating unit 140 may also be a comparator or an exclusive-OR circuit.

During specific implementation, the structures are not limited to the foregoing structures.

Two specific implementation modes are provided as follows.

### Detection mode 1:

n is equal to i, and
the number of different bits between two data segments extracted from two adjacent detection windows is1.

In a specific implementation process, a detection window usually corresponds to a detection circuit capable of independently realizing data input, data segment extraction and correlation operation between a data segment and a local sequence.

A target sequence may be quickly detected again by means of this mode.

### Detection mode 2:

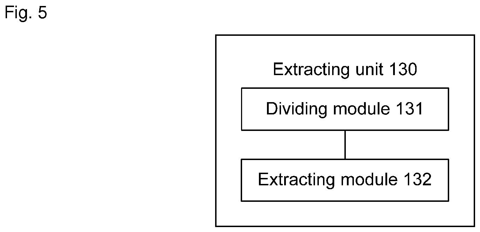

As shown in Fig. 5, when n is less than i, the extracting unit 130 may further include:
a dividing module 131, configured to divide the x-th detection data set into n data detection sub-sets, each data detection sub-set includes continuously-distributed i+(i/n)-1-path data, wherein two adjacent data detection sub-sets include the same i/n paths of data; and
an extracting module 132, configured to extract, by means of each detection window, a (y-1)-th data segment in a data detection sub-set corresponding to the each detection window within a y-th detection period, and extract, by means of each detection window, a y-th data segment in a data detection sub-set corresponding to the each detection window within a (y+1)-th detection period,
y is an integer not less than 1.

The quantity of detection windows in the detection mode 2 is less than the degree of parallelism, such that the quantity of detection circuits is smaller, and the structure of the apparatus is relatively simple.

Specific structures of the dividing module 131 and the extracting module 132 may include processors and storage media. The processors and the storage media are connected by means of communication interfaces inside a synchronization apparatus and communicate with each other. Executable instructions are stored on the storage media, the processors read and execute the executable instructions, and the position of a target sequence may be detected. The processors may be electronic components having a processing function such as CPUs, MCUs, DSPs or FPGAs.

In one embodiment, the target sequence is a frame header sequence or a system synchronization sequence.

The frame header sequence is configured for frame synchronization between communication systems, and the system synchronization sequence is configured for system synchronization between the communication systems. The communication systems usually include receiving ends, sending ends, transmission lanes, transfer ends and other structures.

In one embodiment, frame header sequences of N data frames received from M lanes are the same; and
the operating unit 140 is specifically configured to perform the correlation operation between each data segment and the same local frame header sequence,
wherein N is greater than or equal to 1 and less than or equal to the number of lanes M which is an integer not less than 2.

Since frame header sequences of data frames received by different lanes are the same, the same local frame header sequence may be used for detection, such that the circuit structure can be simplified, and the operand overhead is reduced.

In one embodiment, system synchronization sequences received from different lanes are different; and
the operating unit 140 is specifically configured to perform the correlation operation between each data segment and each local system synchronization sequence.

In conclusion, the apparatus of this embodiment provides hardware for implementing the method of the method embodiment, and may be configured to implement the method according to any technical solution in the method embodiment, which has the advantage of high detection efficiency likewise.

If the integrated module of the embodiment of the disclosure is implemented in the form of a software function module and is sold or used as an independent product, the product may also be stored in a computer readable storage medium. Based on this understanding, the technical solutions of the embodiment of the disclosure may be substantially embodied in the form of a software product or parts contributing to the conventional art may be embodied in the form of a software product, and the computer software product is stored in a storage medium, including a plurality of instructions enabling a computer device, which may be a personal computer, a server or a network device to execute all or part of the steps of the method according to each embodiment of the disclosure. The storage medium includes: various nonvolatile storage media capable of storing program codes, such as a U disk, a mobile hard disk, a Read-Only Memory (ROM), a Random Access Memory (RAM), a disk or an optical disc. Thus, the embodiment of the disclosure is not limited to a combination of any specific hardware and software.

Those skilled in the art shall understand that the embodiment of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

Correspondingly, the embodiment of the disclosure also provides a computer storage medium. The computer storage medium includes a set of instructions. When the instructions are executed, at least one processor is triggered to execute the sequence detection method of the embodiment of the disclosure.

The above is only the preferred embodiments of the disclosure and not intended to limit the scope of protection of the disclosure.

## Claims

1. A sequence detection method, comprising:
Acquiring (S110) i-path data with the degree of parallelism i;
forming (S120) an x-th detection data set by joining x-th i-path data and (x+1)-th i-path data;
extracting (S130) s paths of data contiguously distributed in the detection data set within each of n detection windows to form n data segments;
performing (S140) a correlation operation between each data segment and a local sequence; and
determining (S150), according to a result of the correlation operation, whether a data segment is a target sequence,
wherein x is an integer not less than 1, x is represented as an x-th input moment, x+1 is represented as an (x+1)-th input moment, and the (x+1)-th input moment is later than the x-th input moment, and i is an integer not less than 2,
n is less than or equal to i, and
s is an integer not less than 1 and equal to a bit number of the target sequence.

2. The method according to claim 1, wherein
n is equal to i, and
the number of different bits between two data segments extracted from two adjacent detection windows is 1.

3. The method according to claim 1, wherein
when n is less than i, extracting the s paths of data contiguously distributed in the detection data set within each of n detection windows to form n data segments further comprises:
dividing the x-th detection data set into n data detection sub-sets, each of the n data detection sub-sets comprising contiguously-distributed i+(i/n)-1-path data, wherein two adjacent data detection sub-sets comprise the same i/n-path data;
extracting, by means of each detection window, a (y-1)-th data segment in a data detection sub-set corresponding to the each detection window within a y-th detection period; and
extracting, by means of each detection window, a y-th data segment in a data detection sub-set corresponding to the each detection window within a (y+1)-th detection period,
y being an integer not less than 1.

4. The method according to any one of claims 1-3, wherein
the target sequence is a frame header sequence or a system synchronization sequence.

5. The method according to claim 4, wherein
frame header sequences of N data frames received from M lanes are the same; and
correspondingly, performing the correlation operation between each data segment and the local sequence is:
performing the correlation operation between each data segment and the same local frame header sequence,
wherein N is greater than or equal to 1 and less than or equal to the number of lanes M which is an integer not less than 2.

6. The method according to claim 4, wherein
system synchronization sequences received from different lanes are different; and
correspondingly, performing the correlation operation between each data segment and the local sequence is:
performing the correlation operation between each data segment and each local system synchronization sequence.

7. A sequence detection apparatus, comprising:
an acquiring unit (110), configured to acquire i-path data with the degree of parallelism i;
a forming unit (120), configured to form an x-th detection data set by joining x-th i-path data and (x+1)-th i-path data;
an extracting unit (130), configured to extract s paths of data contiguously distributed in the detection data set within each of n detection windows to form n data segments;
an operating unit (140), configured to perform a correlation operation between each data segment and a local sequence; and
a determining unit (150), configured to determine, according to a result of the correlation operation, whether a data segment is a target sequence,
wherein x is an integer not less than 1, x is represented as an x-th input moment, x+1 is represented as an (x+1)-th input moment, and the (x+1)-th input moment is later than the x-th input moment, and i is an integer not less than 2,
n is less than or equal to i, and
s is an integer not less than 1 and equal to a bit number of the target sequence.

8. The apparatus according to claim 7, wherein
n is equal to i, and
the number of different bits between two data segments extracted from two adjacent detection windows is 1.

9. The apparatus according to claim 7, wherein
when n is less than i, the extracting unit (130) further comprises:
a dividing module (131), configured to divide the x-th detection data set into n data detection sub-sets, each of the n data detection sub-sets comprising contiguously-distributed i+(i/n)-1-path data, wherein two adjacent data detection sub-sets comprise the same i/n-path data; and
an extracting module (132), configured to extract, by means of each detection window, a (y-1)-th data segment in a data detection sub-set corresponding to the each detection window within a y-th detection period, and extract, by means of each detection window, a y-th data segment in a data detection sub-set corresponding to the each detection window within a (y+1)-th detection period,
y is an integer not less than 1.

10. The apparatus according to any one of claims 7-9, wherein
the target sequence is a frame header sequence or a system synchronization sequence.

11. The apparatus according to claim 10, wherein
frame header sequences of N data frames received from M lanes are the same; and
correspondingly, the operating unit (140) is configured to perform the correlation operation between each data segment and the same local frame header sequence,
wherein N is greater than or equal to 1 and less than or equal to the number of lanes M which is an integer not less than 2.

12. The apparatus according to claim 10, wherein
system synchronization sequences received from different lanes are different; and
correspondingly, the operating unit (140) is configured to perform the correlation operation between each data segment and each local system synchronization sequence.

13. A computer storage medium, comprising a set of instructions, when the instructions are executed, at least one processor is triggered to execute the sequence detection method according to any one of claims 1-6.

## Patentansprüche

1. Sequenzdetektionsverfahren, das Folgendes umfasst:
Erfassen (S110) von i-Pfad-Daten mit dem Parallelitätsgrad i;
Bilden (S120) eines x-ten Detektionsdatensatzes durch Verbinden von x-ten i-Pfaddaten und (x+1)-ten i-Pfaddaten;
Extrahieren (S130) von s Datenpfaden von Daten, die zusammenhängend in dem Detektionsdatensatz in jedem von n Erfassungsfenstern verteilt sind, um n Datensegmente zu bilden;
Durchführen (S140) einer Korrelationsoperation zwischen jedem Datensegment und einer lokalen Sequenz; und
Bestimmen (S150) gemäß einem Ergebnis der Korrelationsoperation, ob es sich bei einem Datensegment um eine Zielsequenz handelt,
wobei es sich bei x um eine ganze Zahl handelt, die nicht kleiner als 1 ist, x als ein x-ter Eingangsmoment dargestellt ist, x+1 als ein (x+1)-ter Eingangsmoment dargestellt ist und der (x+1)-te Eingangsmoment später als der x-te Eingangsmoment ist, und wobei es sich bei i um eine ganze Zahl handelt, die nicht kleiner als 2 ist,
wobei n kleiner oder gleich i ist, und
wobei es sich bei s um eine ganze Zahl handelt, die nicht kleiner als 1 ist und einer Bitanzahl der Zielsequenz entspricht.

2. Verfahren nach Anspruch 1, wobei
n gleich i ist, und
die Anzahl unterschiedlicher Bits zwischen zwei Datensegmenten, die aus zwei benachbarten Detektionsfenstern extrahiert wurden, 1 ist.

3. Verfahren nach Anspruch 1, wobei:
wenn n nicht kleiner als i ist, das Extrahieren der s Datenpfade von Daten, die zusammenhängend in dem Detektionsdatensatz in jedem von n Erfassungsfenstern verteilt sind, um n Datensegmente zu bilden, weiterhin Folgendes umfasst:
Teilen des x-ten Detektionsdatensatzes in n Datendetektionssuntersätze, wobei jeder der n Datendetektionssuntersätze zusammenhängend verteilte i+(i/n)-1-Pfaddaten umfasst, wobei zwei benachbarte Datendetektionssuntersätze die gleichen i/n-Pfaddaten umfassen;
mittels jedes Detektionsfensters Extrahieren eines (y-1)-ten Datensegments in einem Datendetektionssuntersatz, das jedem Detektionsfenster innerhalb einer y-ten Detektionsperiode entspricht; und
mittels jedes Detektionsfensters Extrahieren eines y-ten Datensegments in einem Datendetektionssuntersatz, das jedem Detektionsfenster innerhalb einer (y+1)-ten Detektionsperiode entspricht,
wobei es sich bei y um eine ganze Zahl nicht kleiner als 1 handelt.

4. Verfahren nach einem der Ansprüche 1 bis 3, wobei
es sich bei der Zielsequenz um eine Frameheadersequenz oder um eine Systemsynchronisationssequenz handelt.

5. Verfahren nach Anspruch 4, wobei
Frameheadersequenzen von N Datenrahmen, die von M Spuren empfangen werden, gleich sind; und
es sich bei der Durchführung der Korrelationsoperation zwischen jedem Datensegment und einer lokalen Sequenz dementsprechend um Folgendes handelt:
Durchführen der Korrelationsoperation zwischen jedem Datensegment und der gleichen lokalen Frameheadersequenz,
wobei N größer oder gleich 1 ist und kleiner oder gleich der Anzahl von Spuren M ist, bei der es sich um eine ganze Zahl nicht kleiner als 2 handelt.

6. Verfahren nach Anspruch 4, wobei
Systemsynchronisationssequenzen, die von unterschiedlichen Spuren empfangen werden, unterschiedlich sind; und
es sich bei der Durchführung der Korrelationsoperation zwischen jedem Datensegment und der lokalen Sequenz dementsprechend um Folgendes handelt:
Durchführen der Korrelationsoperation zwischen jedem Datensegment und jeder lokalen Systemsynchronisationssequenz.

7. Sequenzdetektionsvorrichtung, die Folgendes umfasst:
eine Erfassungseinheit (110), die zum Erfassen von i-Pfad-Daten mit dem Parallelitätsgrad i ausgelegt ist;
eine Bildungseinheit (120), die zum Bilden eines x-ten Detektionsdatensatzes durch Verbinden von x-ten i-Pfaddaten und (x+1)-ten i-Pfaddaten ausgelegt ist;
eine Extraktionseinheit (130), die zum Extrahieren von s Datenpfaden von Daten, die zusammenhängend in dem Detektionsdatensatz in jedem von n Erfassungsfenstern verteilt sind, um n Datensegmente zu bilden, ausgelegt ist;
eine Operationseinheit (140), die zum Durchführen einer Korrelationsoperation zwischen jedem Datensegment und einer lokalen Sequenz ausgelegt ist; und
eine Bestimmungseinheit (150), die dazu ausgelegt ist, gemäß einem Ergebnis der Korrelationsoperation zu bestimmen, ob es sich bei einem Datensegment um eine Zielsequenz handelt,
wobei es sich bei x um eine ganze Zahl handelt, die nicht kleiner als 1 ist, x als ein x-ter Eingangsmoment dargestellt ist, x+1 als ein (x+1)-ter Eingangsmoment dargestellt ist und der (x+1)-te Eingangsmoment später als der x-te Eingangsmoment ist, und wobei es sich bei i um eine ganze Zahl handelt, die nicht kleiner als 2 ist,
wobei n kleiner oder gleich i ist, und
wobei es sich bei s um eine ganze Zahl handelt, die nicht kleiner als 1 ist und einer Bitanzahl der Zielsequenz entspricht.

8. Vorrichtung nach Anspruch 7, wobei
n gleich i ist, und
die Anzahl unterschiedlicher Bits zwischen zwei Datensegmenten, die aus zwei benachbarten Detektionsfenstern extrahiert wurden, 1 ist.

9. Vorrichtung nach Anspruch 7, wobei,
wenn n kleiner als i ist, die Extraktionseinheit (130) weiterhin Folgendes umfasst:
ein Teilungsmodul (131), das zum Teilen des x-ten Detektionsdatensatzes in n Datendetektionssuntersätze ausgelegt ist, wobei jeder der n Datendetektionssuntersätze zusammenhängend verteilte i+(i/n)-1-Pfaddaten umfasst, wobei zwei benachbarte Datendetektionssuntersätze die gleichen i/n-Pfaddaten umfassen; und
ein Extraktionsmodul (132), das dazu ausgelegt ist, mittels jedes Detektionsfensters ein (y-1)-tes Datensegment in einem Datendetektionssuntersatz, das jedem Detektionsfenster innerhalb einer y-ten Detektionsperiode entspricht, zu extrahieren, und mittels jedes Detektionsfensters ein y-tes Datensegment in einem Datendetektionssuntersatz, das jedem Detektionsfenster innerhalb einer (y+1)-ten Detektionsperiode entspricht, zu extrahieren,
wobei es sich bei y um eine ganze Zahl nicht kleiner als 1 handelt.

10. Vorrichtung nach einem der Ansprüche 7 bis 9, wobei
es sich bei der Zielsequenz um eine Frameheadersequenz oder um eine Systemsynchronisationssequenz handelt.

11. Vorrichtung nach Anspruch 10, wobei
Frameheadersequenzen von N Datenrahmen, die von M Spuren empfangen werden, gleich sind; und
dementsprechend die Operationseinheit (140) zum Durchführen der Korrelationsoperation zwischen jedem Datensegment und einer lokalen Frameheadersequenz ausgelegt ist,
wobei N größer oder gleich 1 ist und kleiner oder gleich der Anzahl von Spuren M ist, bei der es sich um eine ganze Zahl nicht kleiner als 2 handelt.

12. Vorrichtung nach Anspruch 10, wobei
Systemsynchronisationssequenzen, die von unterschiedlichen Spuren empfangen werden, unterschiedlich sind; und
dementsprechend die Operationseinheit (140) zum Durchführen der Korrelationsoperation zwischen jedem Datensegment und jeder lokalen Systemsynchronisationssequenz ausgelegt ist.

13. Computerspeichermedium, das einen Satz von Anweisungen umfasst, wobei, wenn die Anweisungen ausgeführt werden, wenigstens ein Prozessor ausgelöst wird, um das Sequenzdetektionsverfahren nach einem der Ansprüche 1 bis 6 auszuführen.

## Revendications

1. Procédé de détection de séquence, comprenant :
l'acquisition (S110) de données de chemin i d'un degré de parallélisme i,
la formation (S120) d'un x-ième ensemble de données de détection enjoignant des x-ièmes données de chemin i et des (x+1)-ièmes données de chemin i,
l'extraction (S130) de s chemins de données distribuées de façon contiguë dans l'ensemble de données de détection au sein de chacune des fenêtres de détection parmi n fenêtres de détection pour former n segments de données,
la réalisation (S140) d'une opération de corrélation entre chaque segment de données et une séquence locale, et
la détermination (S150), en fonction du résultat de l'opération de corrélation, du fait qu'un segment de données est une séquence cible ou non ;
x étant un entier non inférieur à 1, x étant représenté sous la forme d'un x-ième moment d'entrée, x+1 étant représenté sous la forme d'un (x+1)-ième moment d'entrée, et le (x+1)-ième moment d'entrée venant plus tard que le x-ième moment d'entrée, et i étant un entier non inférieur à 2,
n étant inférieur ou égal à i, et
s étant un entier non inférieur à 1 et égal au nombre de bits de la séquence cible.

2. Procédé selon la revendication 1, dans lequel
n est égal à i, et
le nombre de bits différents entre deux segments de données extraits de deux fenêtres de détection adjacentes est de 1.

3. Procédé selon la revendication 1, dans lequel
lorsque n est inférieur à i, l'extraction des s chemins de données distribuées de façon contiguë dans l'ensemble de données de détection au sein de chacune des n fenêtres de détection pour former n segments de données comprend en outre :
la division du x-ième ensemble de données de détection en n sous-ensembles de détection de données, chacun des n sous-ensembles de détection de données comprenant des données de chemin i+(i/n)-1 distribuées de façon contiguë, deux sous-ensembles de détection de données adjacents comprenant les mêmes données de chemin i/n,
l'extraction, au moyen de chaque fenêtre de détection, d'un (y-l)-ième segment de données dans un sous-ensemble de détection de données correspondant à chaque fenêtre de détection au sein d'une y-ième période de détection, et
l'extraction, au moyen de chaque fenêtre de détection, d'un y-ième segment de données dans un sous-ensemble de détection de données correspondant à chaque fenêtre de détection au sein d'une (y+1)-ième période de détection ;
y étant un entier non inférieur à 1.

4. Procédé selon l'une quelconque des revendications 1 à 3, dans lequel
la séquence cible est une séquence d'en-tête de trame ou une séquence de synchronisation système.

5. Procédé selon la revendication 4, dans lequel
les séquences d'en-tête de trame de N trames de données reçues en provenance de M voies sont les mêmes ; et
en conséquence, la réalisation de l'opération de corrélation entre chaque segment de données et la séquence locale consiste à :
réaliser l'opération de corrélation entre chaque segment de données et la même séquence d'en-tête de trame,
N étant supérieur ou égal à 1 et inférieur ou égal au nombre de voies M consistant en un entier non inférieur à 2.

6. Procédé selon la revendication 4, dans lequel
les séquences de synchronisation système reçues en provenance de différentes voies sont différentes ; et
en conséquence, la réalisation de l'opération de corrélation entre chaque segment de données et la séquence locale consiste à :
réaliser l'opération de corrélation entre chaque segment de données et chaque séquence de synchronisation système.

7. Dispositif de détection de séquence, comprenant :
une unité d'acquisition (110), conçue pour acquérir des données de chemin i d'un degré de parallélisme i,
une unité de formation (120), conçue pour former un x-ième ensemble de données de détection en joignant des x-ièmes données de chemin i et des (x+1)-ièmes données de chemin i,
une unité d'extraction (130), conçue pour extraire s chemins de données distribuées de façon contiguë dans l'ensemble de données de détection au sein de chacune des fenêtres de détection parmi n fenêtres de détection pour former n segments de données,
une unité d'opération (140), conçue pour réaliser une opération de corrélation entre chaque segment de données et une séquence locale, et
une unité de détermination (150), conçue pour déterminer, en fonction du résultat de l'opération de corrélation, le fait qu'un segment de données est une séquence cible ou non ;
x étant un entier non inférieur à 1, x étant représenté sous la forme d'un x-ième moment d'entrée, x+1 étant représenté sous la forme d'un (x+1)-ième moment d'entrée, et le (x+1)-ième moment d'entrée venant plus tard que le x-ième moment d'entrée, et i étant un entier non inférieur à 2,
n étant inférieur ou égal à i, et
s étant un entier non inférieur à 1 et égal au nombre de bits de la séquence cible.

8. Dispositif selon la revendication 7, dans lequel
n est égal à i, et
le nombre de bits différents entre deux segments de données extraits de deux fenêtres de détection adjacentes est de 1.

9. Dispositif selon la revendication 7, dans lequel
lorsque n est inférieur à i, l'unité d'extraction (130) comprend en outre :
un module de division (131), conçu pour diviser le x-ième ensemble de données de détection en n sous-ensembles de détection de données, chacun des n sous-ensembles de détection de données comprenant des données de chemin i+(i/n)-1 distribuées de façon contiguë, deux sous-ensembles de détection de données adjacents comprenant les mêmes données de chemin i/n, et
un module d'extraction (132), conçu pour extraire, au moyen de chaque fenêtre de détection, un (y-l)-ième segment de données dans un sous-ensemble de détection de données correspondant à chaque fenêtre de détection au sein d'une y-ième période de détection, et pour extraire, au moyen de chaque fenêtre de détection, un y-ième segment de données dans un sous-ensemble de détection de données correspondant à chaque fenêtre de détection au sein d'une (y+1)-ième période de détection ;
y étant un entier non inférieur à 1.

10. Dispositif selon l'une quelconque des revendications 7 à 9, dans lequel
la séquence cible est une séquence d'en-tête de trame ou une séquence de synchronisation système.

11. Dispositif selon la revendication 10, dans lequel
les séquences d'en-tête de trame de N trames de données reçues en provenance de M voies sont les mêmes ; et
en conséquence, l'unité d'opération (140) est conçue pour réaliser l'opération de corrélation entre chaque segment de données et la même séquence d'en-tête de trame,
N étant supérieur ou égal à 1 et inférieur ou égal au nombre de voies M consistant en un entier non inférieur à 2.

12. Dispositif selon la revendication 10, dans lequel
les séquences de synchronisation système reçues en provenance de différentes voies sont différentes ; et
en conséquence, l'unité d'opération (140) est conçue pour réaliser l'opération de corrélation entre chaque segment de données et chaque séquence de synchronisation système.

13. Support d'enregistrement informatique, comprenant un ensemble d'instructions ; lorsque les instructions sont exécutées, au moins un processeur est déclenché pour exécuter le procédé de détection de séquence selon l'une quelconque des revendications 1 à 6.
